# EUROPÄISCHE PATENTSCHRIFT

(11) **EP 1 841 650 B1**
(45) Veröffentlichungstag und Bekanntmachung des Hinweises auf die Patenterteilung: **18.03.2009**
(21) Anmeldenummer: 06707842.8
(22) Anmeldetag: 25.01.2006
(51) Int. Cl.: B64F 5/00

(54) **AUFSATTELPLATTFORM**
SADDLE PLATFORM
PLATEFORME SEMI-PORTEE

(30) Priorität: 25.01.2005 DE 102005003514
(43) Veröffentlichungstag der Anmeldung: 10.10.2007
(73) Patentinhaber: Lufthansa Engineering and Operational Services GmbH, 60546 Frankfurt (DE)
(72) Erfinder: DOWE, Bernhard, 60488 Frankfurt/Main (DE)
(74) Vertreter: Seiffert, Klaus
(86) Internationale Anmeldenummer: PCT/EP2006/050449
(87) Internationale Veröffentlichungsnummer: WO 2006/079638

(56) Entgegenhaltungen:
- AU-A1- 2004 200 088
- US-A- 5 701 704

## Beschreibung

Die vorliegende Erfindung betrifft eine Aufsattelplattform für Flugzeuge.

Die Rümpfe moderner Verkehrsflugzeuge sind in Spantenbauweise hergestellt, wobei sich Spanten oder Stringer entlang des Rumpfquerschnitts erstrecken und die äußere Form des Rumpfes vorgeben. Die Stringer sind in Abhängigkeit von Muster und Bauart in regelmäßigen oder unregelmäßigen Abständen entlang der Rumpflänge des Flugzeugs angeordnet. Die Zwischenräume zwischen den Spanten werden von modernen Aluminiumstrukturen, zumeist in Wabengeometrie ausgefüllt und sind mit Aluminium- oder Kunststoffplatten nach außen begrenzt. Diese Leichtbauweise erlaubt die Konstruktion großer Flugzeugrümpfe bei vergleichsweise geringem Gewicht. Dabei wird eine geringe Punktbelastbarkeit der einzelnen Rumpfabschnitte zwischen den Spanten in Kauf genommen. Im normalen Flugbetrieb treten solche Punktbelastungen in der Regel nicht auf. Auch bei der Wartung war es bisher nicht erforderlich, den Flugzeugrumpf zu belasten, da die Wartungsarbeiten vom Boden oder von auf dem Boden stehenden Gerüsten aus durchgeführt werden können.

Werden Wartungsarbeiten an der Außenhülle des Flugzeuges erforderlich, so wird das Flugzeug nach dem Stand der Technik mit einem am Boden abgestützten Gerüst eingerüstet, ähnlich den Renovierungsarbeiten an einem Gebäude. Die damit verbundenen vergleichsweise hohen Kosten sowie die lange Zeitdauer des Aufbaus eines solchen am Boden abgetragenen Gerüsts können in Kauf genommen werden, da Reparatur- und Wartungsarbeiten an der Flugzeughülle, insbesondere an der Oberseite, nur in unregelmäßigen und vergleichsweise langen Zeitabständen auftreten.

Inzwischen werden Flugzeuge mit zunehmend komplexeren Antennen an der Rumpfoberseite ausgestattet. Seit längerem bekannte Antennen dienen der Bereitstellung von Satellitentelefonverbindungen für die Passagiere an Bord der Flugzeuge.

Seit kurzem sind jedoch auch Antennenanlagen zur Kommunikation mit Satelliten zur Bereitstellung von Breitbandinternetverbindungen erhältlich, welche auf dem Flugzeugrumpf installiert werden. Diese Empfangsantennen erfordern eine aktive Nachführung des parabolischen Antennenspiegels, um eine optimale Verbindung zwischen Satellit und Flugzeug auch während des Fluges zu gewährleisten. Die kardanisch aufgehängten Antennenspiegel benötigen daher eine komplexe Mechanik zur aktiven Nachführung. Diese muß in regelmäßigen Intervallen gewartet werden, was dazu führt, daß insbesondere die großen Langstreckenflugzeuge, die über entsprechende Technik verfügen, relativ häufig bis über die Oberseite des Rumpfes hinweg eingerüstet werden müssen. Diese Gerüste sind bis über 10 m hoch und entsprechend aufwendig und teuer.
AU 2004 200 088 stellt den nächsten Stand der Technik dar.

Gegenüber den aus dem Stand der Technik bekannten Gerüsten zur Wartung der Rumpfoberseite liegt daher der vorliegenden Erfindung die Aufgabe zugrunde, eine Arbeitsebene für das Wartungspersonal bereitzustellen, welche in kurzer Zeit montierbar und einfach herzustellen ist.

Diese Aufgabe wird erfindungsgemäß dadurch gelöst, daß eine Aufsattelplattform bereitgestellt wird mit einer Arbeitsebene, einer Trägerstruktur, sowie mindestens einer Auflagefläche, welche durch mindestens einen Gurt gebildet wird, wobei sich der Gurt im wesentlichen in Umfangsrichtung des Rumpfes und senkrecht zu dessen Längsachse erstreckt.

Die erfindungsgemäße Aufsattelplattform wird mit Hilfe eines Krans unmittelbar auf die Rumpfoberseite des Flugzeugs aufgelegt. Dabei wird eine punktförmige Belastung der Außenflächen der Flugzeughülle durch die gurtförmige Ausgestaltung der Auflagefläche vermieden. Im Sinne der vorliegenden Erfindung wird unter einem Gurt eine im wesentlichen streifenförmige flächige Struktur verstanden, welche sich der Außenoberfläche des Flugzeugrumpfes anpaßt oder ihr nachgeformt ist. Die erfindungsgemäße Aufsattelplattform dabei - im Gegensatz zu einem auf dem Boden stehenden Gerüst - unbeeinflußt von Relativbewegungen des Flugzeugs gegenüber dem Boden.

Generell wird im Sinne der vorliegenden Erfindung unter einem Gurt ein Auflageelement verstanden, welches sich beim Auflegen auf den Flugzeugrumpf in seiner Form leicht an den Rumpf anpaßt, dabei jedoch nur wenig oder nahezu gar nicht gedehnt wird.

Die erfindungsgemäße Plattform stellt eine bewußte Durchbrechung des grundlegenden Prinzips dar, daß grundsätzlich keine Elemente auf die Außenhaut eines Flugzeugs aufgelegt werden dürfen. Erst die flächige, gut verteilte Abtragung der Kräfte macht eine Durchbrechung dieses Grundsatzes möglich.

Zweckmäßig ist es dabei, wenn der Gurt in Umfangsrichtung des Rumpfes eine größere Abmessung aufweist als in Längsrichtung.

Ein solcher Gurt kann beispielsweise aus einem Blech, vorzugsweise Aluminiumblech, hergestellt sein.

In einer besonders bevorzugten alternativen Ausführungsform ist der Gurt aus einem textilen Material, ähnlich einem Abspanngurt für schwere Lasten, hergestellt. Ein solches Material weist trotz der notwendigen Flexibilität eine hohe Reiß- und Tragfestigkeit auf.

In einer bevorzugten Ausführungsform der Erfindung sind mehrere Gurte, vorzugsweise mindestens 2, 4, 6 oder 8 in Umfangsrichtung verlaufend und in axialer Richtung des Flugzeugrumpfes beabstandet nebeneinander angeordnet. Auf diese Weise wird die Last der Aufsattelplattform möglichst gleichmäßig über die Fläche des Flugzeugrumpfes abgetragen, wobei dennoch zwischen den Gurten ein ausreichender Platz freigelassen werden kann, um an die Rumpfoberfläche bzw. die darauf installierten Antennenstrukturen zu gelangen.

Besonders bevorzugt ist eine Ausführungsform der Erfindung, bei der die Gurte einen Abstand voneinander aufweisen, welcher dem Abstand der Spanten des Flugzeugrumpfes entspricht. Der Abstand der Gurte kann alternativ auch ganzzahliges Vielfaches des Abstandes zwischen den Spanten betragen, wenn dieser Abstand gleichmäßig ist. Dabei wird unter dem Abstand der Gurte der Abstand zwischen den Punkten der halben Breite der jeweiligen Gurte verstanden. Auf diese Weise kann die Aufsattelplattform so auf das Flugzeug aufgelegt werden, daß alle Gurte auf je einer Spante zu liegen kommen. Im Bereich der Spanten können weit höhere Lasten über die Außenhaut des Flugzeugs abgetragen werden als in den Zwischenräumen.

Dabei ist es zweckmäßig, wenn der Gurt eine Breite von 100 mm bis 500 mm, vorzugsweise aber eine Breite von 400 mm aufweist. Auf diese Weise ist es möglich, bei festem Abstand zweier nebeneinander angeordneter Gurte die Aufsattelplattform auf Flugzeuge mit unterschiedlichem Spantenabstand so aufzulegen, daß die Gurte aufgrund ihrer Breite immer auch auf einer Spante zu liegen kommen. Bei entsprechender Wahl der Gurtbreite und des Gurtabstandes liegen die Gurte selbst dann über jeweils einer Spante, wenn die Abstände dieser Spanten über die Länge des Rumpfes hinweg variieren, wie dies bei manchen Flugzeugmustern der Fall ist.

Insbesondere ist für einige Anwendungsfälle eine Ausführungsform der Erfindung bevorzugt, bei welcher die Positionen der einzelnen Gurte an der Aufsattelplattform in axialer Richtung des Flugzeugrumpfes, d. h. quer zur Längserstreckung der Gurte, verstellbar sind. Dies ermöglicht insbesondere eine Anpassung der Gurtposition an den Spantenabstand eines Flugzeugrumpfes.

Bevorzugt ist ansonsten eine Ausführungsform der Erfindung, bei der die Gurte einen Abstand von 530 mm oder zwischen 508 mm (20 Zoll) und 530 mm voneinander aufweisen. Der Abstand von 530 mm entspricht dem Spantenabstand eines Airbus A 340, während der Spantenabstand bei einer Boing 747 regelmäßig 20 Zoll beträgt, in einigen Bereichen jedoch auch davon abweichen kann. Bei geschickter Wahl der Gurtbreiten und -Abstände ist es möglich, ein und dieselbe Plattform für mehrere Flugzeug- bzw. Rumpftypen in gleicher Weise zu verwenden, wobei die Gurte immer über Spanten liegen, ohne hierfür die Gurtabstände verändern zu müssen.

Da die meisten Antennen im Scheitelpunkt der Rumpfoberseite angeordnet sind, ist eine Ausführungsform der Erfindung bevorzugt, bei der mehrere, vorzugsweise 2, 4, 6 oder 8, Gurte in Umfangsrichtung des Flugzeugs hintereinander angeordnet sind, so daß sie effektiv einen in Umfangsrichtung unterbrochenen Gurt bilden. Auf diese Weise entstehen auch in Umfangsrichtung zwischen den einzelnen Gurten gurtfreie Bereiche, in denen sich die Antennen bzw. Antennenabdeckungen des Flugzeugs ohne Belastung durch die Gurte erstrecken können. Bevorzugt ist eine Ausführungsform der Erfindung, bei der die Länge des Gurts in Umfangsrichtung mindestens 200 mm, vorzugsweise mindestens 500 mm, beträgt.

Insbesondere ist es zweckmäßig, wenn sich der Gurt über etwa ein Viertel, vorzugsweise über etwa die Hälfte des Umfangs des Flugzeugs erstreckt.

Bevorzugt ist eine Ausführungsform der Erfindung, bei welcher der Gurt eine Polsterschicht, vorzugsweise aus Schaumstoff, Moosgummi oder Luft aufweist. Auf diese Weise werden Verletzungen der Außenhaut des Flugzeuges durch Einwirkungen des Gurtes verhindert.

Besonders bevorzugt ist eine Ausführungsform der Erfindung, bei der die Geometrie des Gurts und/oder die Geometrie der Trägerstruktur für verschiedene Flugzeugbreiten oder Rumpfdurchmesser einstellbar ist. Auf diese Weise kann die Aufsattelplattform für verschiedene Flugzeugmuster (narrow body, wide body), beispielsweise Airbus A 320 Boeing 737 bzw. Airbus A 340 oder Boing 747, verwendet werden.

Aufgrund der Reibung der Gurte gegen den Flugzeugrumpf ist ein Verrutschen der Plattform gegen den Rumpf nur schwer möglich. Um darüber hinaus jedoch eine möglichst hohe Stabilität der Plattform auf dem Flugzeugrumpf zu erreichen, ist es zweckmäßig, wenn die Aufsattelplattform eine Einrichtung zur Sicherung gegen Verrutschen aufweist. Eine solche Einrichtung ist insbesondere ein Gurt, welcher vergleichbar mit einem Sattelgurt um den Flugzeugrumpf herumgreift oder durch diesen, beispielsweise durch Türöffnungen, hindurchgreift.

Alternativ oder zusätzlich kann die Einrichtung zur Sicherung mit dem Flugzeugrumpf, mit einer Öffnung im Flugzeugrumpf oder mit einem daran befestigten Teil verbindbar sein. Auch eine Abstützung oder eine Anschlagsbegrenzung gegen die Tragfläche ist möglich. Darüber hinaus kann in bestimmten Ausführungsformen eine Abspannung gegen den Boden bzw. gegen auf dem Boden aufliegende Gewichte vorteilhaft sein. Vorzugsweise werden Sicherungsgurte, die nach Möglichkeit in ihrer Länge verstellbar und/oder spannbar sind, in Türöffnungen des Rumpfes eingehakt und sind mit der Aufsattelplattform verbunden. Zum Einhaken werden den Türfassungen angepaßte Profile verwendet.

Besonders bevorzugt ist eine Ausführungsform der vorliegenden Erfindung, bei der die Arbeitsebene aus mehreren Elementen besteht. Dies ermöglicht eine hohe Flexibilität des Einsatzes der Plattform auf dem Rücken eines Flugzeugs. Insbesondere ist es zweckmäßig, wenn einzelne Elemente herausnehmbar, in ihrer Höhe veränderbar oder gegen die anderen Elemente verschiebbar sind.

Bevorzugt ist eine Ausführungsform, bei der die einzelnen Elemente der Arbeitsebene bis an den Flugzeugrumpf heranreichen. Auf diese Weise kann das Wartungspersonal, auf der Arbeitsebene stehend, unmittelbar an die Antennen bzw. deren Verkleidungen gelangen, ohne den Rumpf betreten zu müssen.

Zweckmäßigerweise weisen die Elemente der Arbeitsebene an ihren Kanten vorzugsweise elastische Dichtelemente auf, die einen bündigen Abschluß mit dem Flugzeugrumpf erlauben. Eine derart ausgestaltete Arbeitsebene verhindert das Herabfallen von Werkzeug oder Material durch den Spalt zwischen der Arbeitsebene und dem Flugzeug. Auf diese Weise wird sowohl ein Verkratzen der Außenfläche des Flugzeugs verhindert als auch die nötige Arbeitssicherheit für am Boden laufendes Personal gewährleistet.

In einer besonders bevorzugten Ausführungsform der Erfindung weist die Aufsattelplattform Einrichtungen, vorzugsweise Rollen oder Ketten, auf, mit Hilfe derer sie gegen den Flugzeugrumpf in Längsrichtung verschiebbar ist.

Besonders bevorzugt ist eine Ausführungsform der Erfindung, bei welcher der Gurt zweigeteilt ist und die Enden jedes der Teile mit zwei schwenkbar angeschlagenen Stützen verbunden sind.
Dabei reicht jedes der Gurtteile von einem äußeren Rand am Rumpf bis etwa zum Scheitelpunkt des Rumpfes, so daß der Scheitelbereich selbst freibleibt. Die Stützen sind Bestandteil der Trägerstruktur bzw. bilden eine Verbindung zwischen dem Gurt und der Trägerstruktur.

Insbesondere ist es dabei vorteilhaft wenn die Stützen vorzugsweise um den gleichen Drehpunkt oder zwei nahe beieinander liegende Drehpunkte schwenkbar gelagert sind. Auf diese Weise wird eine Selbstzentrierung der Aufsattelplattform beim Auflegen auf den Flugzeugrumpf erreicht. Es ist zweckmäßig, wenn die beiden Stützen darüber hinaus derart mit Federn gegeneinander bzw gegen die Trägerstruktur vorgespannt sind, daß der Gurt auch dann gespannt ist, wenn die Plattform nicht auf einen Flugzeugrumpf aufgelegt ist.

Bevorzugt ist eine Ausführungsform der erfindungsgemäßen Aufsattelplattform bei welcher die Projektionen der Stützen in eine horizontalen Ebene gleich lang sind. Auf diese Weise wird eine optimale Kraftverteilung entlang des Gurtes erreicht und eine punktförmige Krafteinleitung über die Stützen vermieden.

In einer besonders bevorzugten Ausführungsform der Erfindung ist die Stütze über mindestens eine vorzugsweise gelenkig angeschlagene Druckverteilerplatte mit dem Gurt verbunden.
Die Druckverteilerplatten sind dabei mit den an der Trägerstruktur schwenkbar befestigten Stützen an einem Gelenkpunkt zwischen Stütze und Verteilerplatte verbunden.

Zweckmäßig ist eine Ausgestaltung der Erfindung, bei der die Aufsattelplattform zerlegbar ist. Eine solche zerlegbare Ausführungsform ist insbesondere dann zweckmäßig, wenn ihre einzelnen Elemente mit Hilfe von Kugelsperrbolzen nach dem Zusammenbau gegeneinander sicherbar sind. Auf diese Weise läßt sich die Arbeitsplattform sowohl flächensparend einlagern als auch vorteilhaft zu verschiedenen Einsatzorten in der Welt, vorzugsweise per Luftfracht, transportieren.

Weitere Merkmale, Vorzüge und Anwendungen der vorliegenden Erfindung ergeben sich aus der folgenden Beschreibung einer bevorzugten Ausführungsform sowie den zugehörigen Figuren.
- Figur 1: zeigt eine schematische dreidimensionale Ansicht der erfindungsgemäßen Aufsattelplattform.
- Figur 2: zeigt eine Ausführungsform der Erfindung mit hydraulisch verstellbaren Stützen.
- Figur 3: zeigt eine Luftkissenlagerung der erfindungsgemäßen Aufsattelplattform.
- Figur 4: zeigt eine alternative Ausführungsform der Gurte.
- Figur 5: zeigt eine Ausführungsform der Aufsattelplattform mit textilem Gurt.
- Figur 6: zeigt schematisch den Aufbau des textilen Gurts aus Figur 5.
- Figur 7: zeigt eine alternative Ausführungsform der Stützen.
- Figuren 8A und 8B: zeigen eine Detailansicht einer alternativen Ausführungsform einer höhenverstellbaren Stütze.
- Figur 9: zeigt eine erste Ausführungsform des erfindungsgemäßen Gurtes, bei welchem der Scheitelpunkt des Rumpfes frei bleibt.
- Figur 9A: zeigt eine Draufsicht auf die Gurte aus Figur 9.
- Figur 10: zeigt eine alternative Ausführungsform des erfindungsgemäßen Gurtes.
- Figur 11: zeigt einen zweigeteilten Gurt mit Halteklammer.
- Figur 12: zeigt eine Überkreuzbefestigung der erfindungsgemäßen Gurte.
- Figur 13: zeigt eine Umlenkung der erfindungsgemäßen Gurte am oberen Anlenkpunkt.
- Figur 14: zeigt schematisch die Sicherung der Aufsattelplattform gegen Verrutschen.
- Figur 15: zeigt alternative Befestigung eines zweiteiligen Gurtes mit je einem Paar von Stützen die über Druckverteilerplatten an den Enden je eines Gurtteiles befestigt sind.

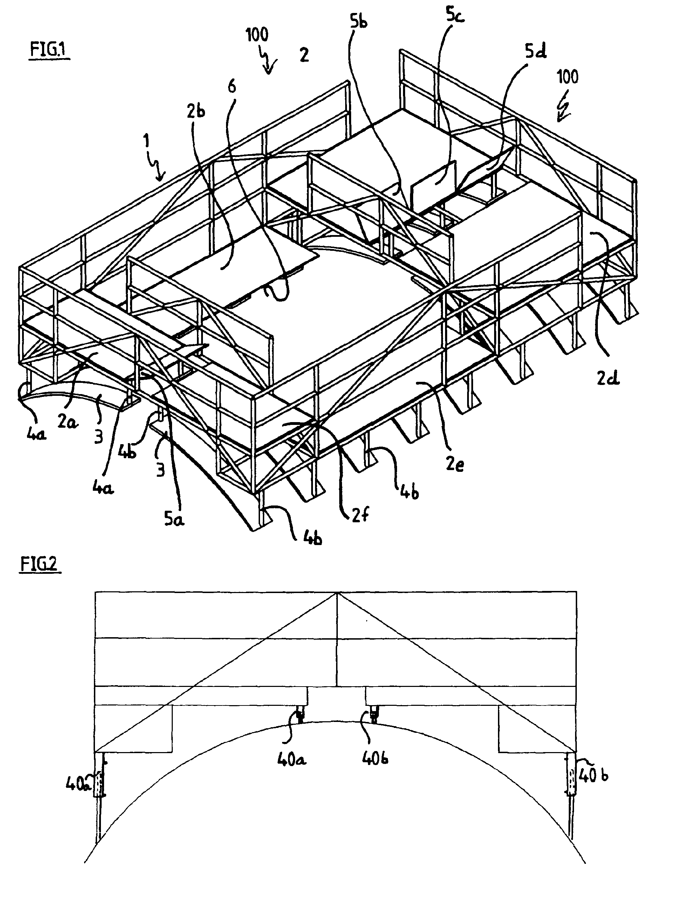

In Figur 1 ist eine schematische dreidimensionale Ansicht der erfindungsgemäßen Aufsattelplattform dargestellt. Die Aufsattelplattform weist eine Trägerstruktur 1, eine Arbeitsebene, welche aus mehreren Elementen 2a bis 2f besteht, sowie Auflageflächen in Form von Gurten 3 auf. Wesentliches Element der Aufsattelplattform sind die in etwa teilkreisförmig gebogenen Gurte 3, mit welchen die Aufsattelplattform auf die Oberseite des Flugzeugrumpfes aufgelegt wird. Bei der in Figur 1 dargestellten Ausführungsform sind die Gurte 3 als gebogene Blechstreifen ausgeführt, welche mit Hilfe einer Moosgummischicht oder einer sonstigen Polsterung an ihrer Unterseite zusätzlich abgepolstert sind. Die Blechstreifen 3 sind entsprechend der Krümmung des Flugzeugrumpfes mit einem etwas größeren Krümmungsradius vorgebogen, können sich jedoch aufgrund der Flexibilität des Bleches dem Rumpf und etwaigen Unebenheiten in der Rumpfoberfläche anpassen.

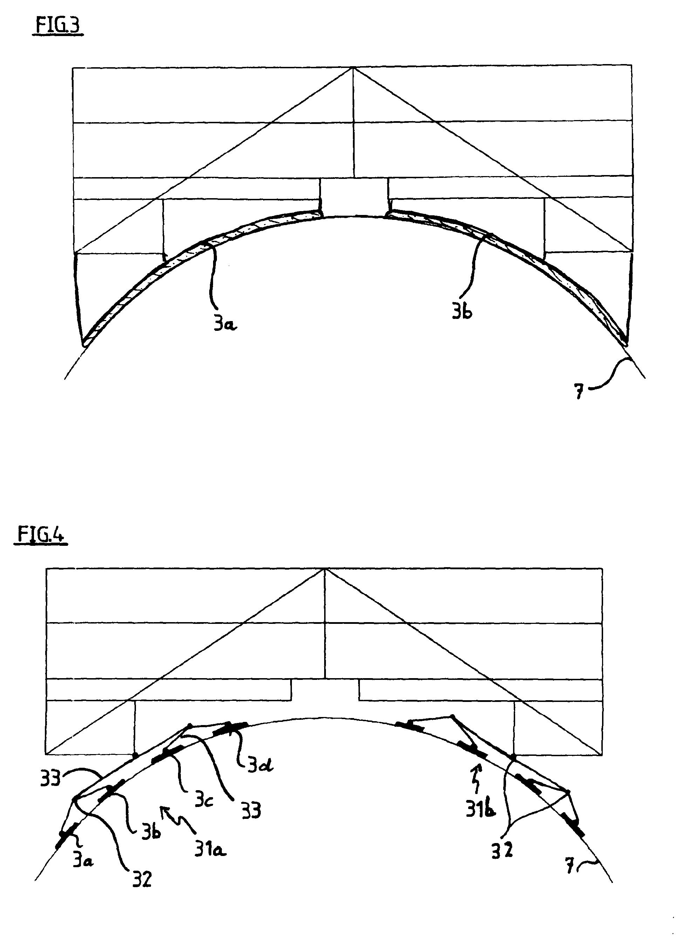

In Figur 3 ist alternativ zu einer Abpolsterung mit Hilfe von Moosgummi eine Lagerung der Gurte 3a, 3b auf einem Luftkissen dargestellt. Dazu wird durch in die Gurte eingelassene Kanäle Druckluft auf die Unterseite der Gurte, d.h. zwischen den Gurt und die Oberseite des Flugzeugrumpfes 7, geblasen.

Die Gurte 3 sind mit Hilfe von Stützen 4a, 4b der Trägerstruktur mit den oberhalb der Gurte 3 angeordneten Elementen der Trägerstruktur verbunden. Die Stützen 4a, 4b können starre Stützen, so wie in Figur 1 dargestellt, sein oder aber einstellbar ausgeführt sein, so daß die Auflageplattform an verschiedene Flugzeugmuster angepaßt werden kann.

Die Stützen 4a, 4b sind hier nur schematisch wiedergegeben und können im Übrigen Querstreben und/oder Federelemente aufweisen. In jedem Fall muß sichergestellt werden, daß die Stützen keine Punktlasten in die Rumpfoberfläche einleiten. Dies wird vor allem gewährleistet durch die begrenzte Dehnbarkeit der Gurte, die sich zwar beim Auflegen auf den Rumpf an diesen anpassen, dabei jedoch zunehmend gespannt werden, so daß diese abgestützten Enden des Gurtes den Rumpf nur leicht und jedenfalls nicht mit größeren Flächenbelastungen berühren als die dazwischen liegenden relativ großflächigen Abschnitte des Gurtes.

Entsprechend ausgeführte Stützen sind schematisch in Figur 2 dargestellt, wobei die Höhe der Stützen 40a, 40b mit Hilfe von hydraulischen Antrieben angepaßt werden kann.

Die in Figur 1 dargestellte Aufsattelplattform weist eine Arbeitsebene aus insgesamt sechs Elementen 2a bis 2f auf. Diese sind jeweils paarweise gegenüberliegend angeordnet, wobei zwischen den einzelnen Ebenen, beispielsweise 2d und 2e ein Abstand verbleibt, in welchem die Oberfläche des Flugzeugrumpfes zugänglich ist. Dabei liegen die Elemente 2a, 2f bzw. 2c, 2d oberhalb des Scheitelpunktes des Flugzeugrumpfes. Diese Elemente der Arbeitsebene können als Hilfsebenen eingesetzt werden, beispielsweise zum Abstellen von Werkzeug. Die Abstände zwischen diesen Elementen 2a, 2f, bzw. 2c, 2d können mit Hilfe von herunterklappbaren Elementen 5a bis 5d der Arbeitsebene überbrückt werden, falls unter diesen Ebenen keine zu wartenden Teile, beispielsweise Antennen, angeordnet sind. Demgegenüber liegen die Elemente 2b, 2e der Arbeitsebene in der Höhe des Scheitelpunktes des Flugzeugrumpfes bzw. ein wenig darunter. Dadurch ergibt sich zusammen mit der Rumpfoberseite eine durchgehende, beinahe ebene Fläche. Auf diese Weise können die in diesem Bereich auf dem Flugzeugrumpf angeordneten Antennen, insbesondere die Parabolantenne zum Empfang des Breitbandkommunikationssignals, bequem gewartet werden. Um ein Herunterfallen von Werkzeug oder von auch einzelnen Teilen zu verhindern sind die Kanten 6 der Elemente 2b, 2e der Arbeitsebene mit einer Gummilippe als Dichtelement ausgestaltet. Die Gummilippe schließt bündig mit der Rumpfoberseite des Flugzeugs ab, so daß Werkzeuge oder Teile, welche auf der gekrümmten Rumpfoberseite hinunterrutschen, lediglich bis zur Kante 6 der Arbeitsebene 2b, 2e rutschen. Alternativ oder zusätzlich kann dieser Bereich auch mit herkömmlichem Klebeband abgeklebt werden.

Bei der in Figur 1 dargestellten Ausführungsform sind jeweils acht Gurte 3 in Längsrichtung des Flugzeugs beabstandet nebeneinander angeordnet, während in Umfangsrichtung jeweils zwei Gurte 3 symmetrisch zum Scheitelpunkt des Flugzeugrumpfes herum angeordnet sind. Der Abstand der Gurte 3 in Längsrichtung ist so gewählt, daß er mit dem Spantenabstand des Flugzeugrumpfes in etwa übereinstimmt. Aufgrund der Breite der einzelnen Gurte 3 können Variationen im Spantenabstand abgefangen werden, wobei trotzdem jeder Gurt über einer Spante zu liegen kommt.

Der Abstand zwischen den Gurten in Längsrichtung des Rumpfes beträgt 530 mm, gemessen zwischen den Mitten zweier benachbarter Gurte. Dieses Maß ist identisch mit dem Abstand der Spanten bzw. Stringer eines Airbus A 340.

In der dargestellten Ausführungsform ist die Trägerstruktur z. B. in Stab-/Knotentechnik bzw. Fachwerkkonstruktion aus Aluminium hergestellt, um das Gewicht der Aufsattelplattform so gering wie möglich zu halten. Alternativ sind aber auch andere Leichtbauweisen, beispielsweise aus kohlefaserverstärktem Kunststoff möglich.

Die in Figur 1 dargestellte Aufsattelplattform weist in der bevorzugten Variante äußere Abmessungen von 5 x 8 m auf. Diese Maße sind ausreichend für die Wartung der neuen Breitbandkommunikationsantennen, deren aerodynamische Verkleidung eine Abmessung von etwa 2,2 x 1,2 m aufweist.

Aufgrund der Maße der in Figur 1 dargestellten Gurte 3 aus Metall und der damit verbundenen begrenzten Dehnfähigkeit eignet sich diese Ausführungsform insbesondere zum Einsatz auf ein Flugzeugen mit den näherungsweise gleichen Rumpfkrümmungen, da die vorgekrümmten Metallgurte nur geringen Spielraum in der Krümmungsanspaßung haben.

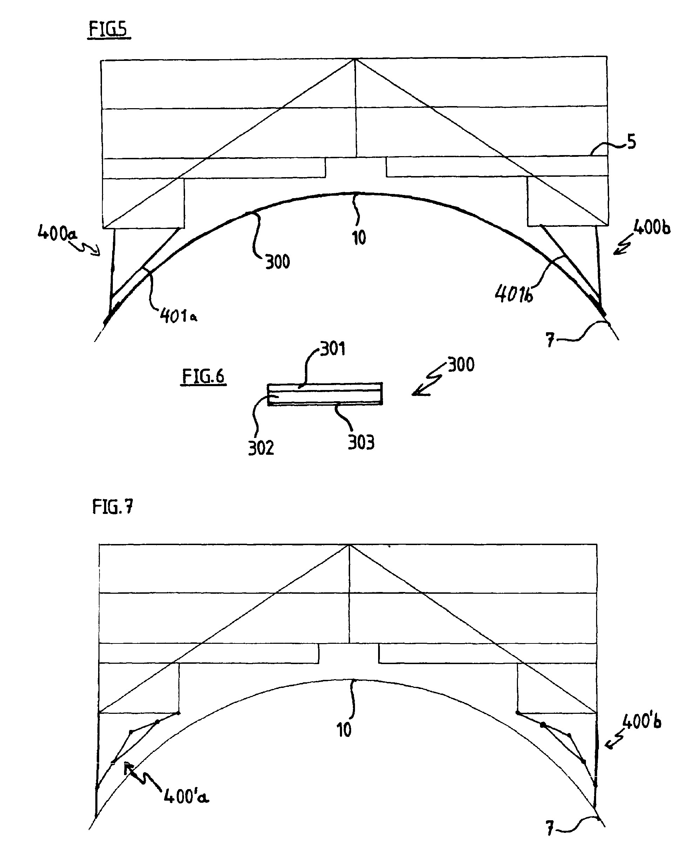

Demgegenüber sind die in den Figuren 4 und 5 dargestellten Ausführungsformen der Gurte insbesondere zur Auflage der Aufsattelplattform auf unterschiedlichen Flugzeugmustern mit verschiedenen Rumpfbreiten und Krümmungen der Rumpfoberfläche besser geeignet.

Die in Figur 4 dargestellte Ausführungsform weist symmetrisch angeordnete Auflageelemente 31 a, 31 b mit jeweils vier Gurten 3a bis 3d auf. Die einzelnen Gurte 3a bis 3d sind Elemente aus Aluminiumblech, welche Ausschnitte aus den in Figur 1 gezeigten Gurten 3 darstellen, welche aber auch die Form runder Teller annehmen können.. Diese sind mit Hilfe von Gelenken 32 und Verbindungselementen 33 zu einem flexiblen Geschirr zusammengefügt, so daß sich die einzelnen Elemente dem Radius eines jeden Flugzeugmusters anpassen können.

Die in Figur 5 gezeigte Ausführungsform der Erfindung weist einen Gurt 300 auf, der aus einem textilen Material hergestellt ist. Dieser paßt sich flexibel der Oberfläche des Flugzeugrumpfes 7 an. Der dargestellte Gurt läuft durchgehend von einer ersten Befestigung an der linken Stütze 400a über den Scheitelpunkt des Flugzeugrumpfes 7 hinweg zu einer zweiten Befestigung an der rechten Stütze 400b. Die Befestigungen des Gurts sind gelenkig an den Stützen 400a, 400b angeschlagen, um auch im Bereich der Aufhängung eine möglichst gute Anpassung an die Oberfläche des Flugzeugs zu gewährleisten. Die Stützen 400a, b; 401 a, b sind, vorzugsweise in ihrer Längsrichtung, verstellbar, um die Spannung des Gurtes in der Weise optimal einstellen zu können, daß keine erhöhten Belastungen des Rumpfes unter den Stützen auftreten.

In Figur 6 ist der Aufbau des Gurtes 300 detailliert dargestellt. Zum Abtragen der Kräfte dient ein etwa 2 mm dicker textiler Gurt 301, welcher aus einem Webmaterial hergestellt ist, so wie es zum Abspannen und Kranen von Schwerlasten hergestellt wird. An seiner Unterseite ist das textile Material 301 mit einer Schaumstoffschicht 302 überzogen, die den Flugzeugrumpf vor etwaigen Beschädigungen durch den Gurt oder durch Verunreinigungen zwischen Gurt und Rumpf schützt. Um einen Abrieb des Schaumstoffs 302 auch bei harter Beanspruchung des Gurtes 300 zu vermeiden, ist das Schaumstoffmaterial an seiner Unterseite, d.h. auf der Auflagefläche mit einer Schutzschicht 303 aus Silikon oder ähnlichem Abdeckmaterial überzogen.

Der in Figuren 5 und 6 dargestellte textile Gurt 300 paßt sich der Krümmung der meisten Flugzeugmuster ohne weiteres an. Jedoch würden starre Stützen 400a, 400b der Ausführungsform aus Figur 5 dazu führen, daß der Abstand der Arbeitsebene 5 vom Scheitelpunkt 10 des Flugzeugrumpfs 7 vom Durchmesser des Flugzeugrumpfs 7 des jeweiligen Musters abhinge.

Um die Arbeitsebene 5 auch bei verschiedenen Flugzeugmustern auf gleicher Höhe in Bezug auf den Scheitelpunkt 10 des Flugzeugrumpfes 7 zu halten und um die Einleitung von Punktkräften in den Rumpf zu vermeiden, sind höhenverstellbare Stützen erforderlich. Eine Möglichkeit für solche höhenverstellbaren Stützen sind bereits in Figur 2 in Verbindung mit aus Metall bzw. Blech gefertigten Gurten dargestellt. Die hier gezeigten hydraulischen Stützen 40a, 40b können jedoch auch mit textilen Gurten verwendet werden.

Eine alternative Ausführungsform einer höhenverstellbaren bzw. anpaßbaren Stütze ist in Figur 7 dargestellt. Die gezeigten Stützen 400'a und 400'b sind mit Hilfe von Knickelementen in der Höhe und im effektiven Stützungsabstand variierbar.

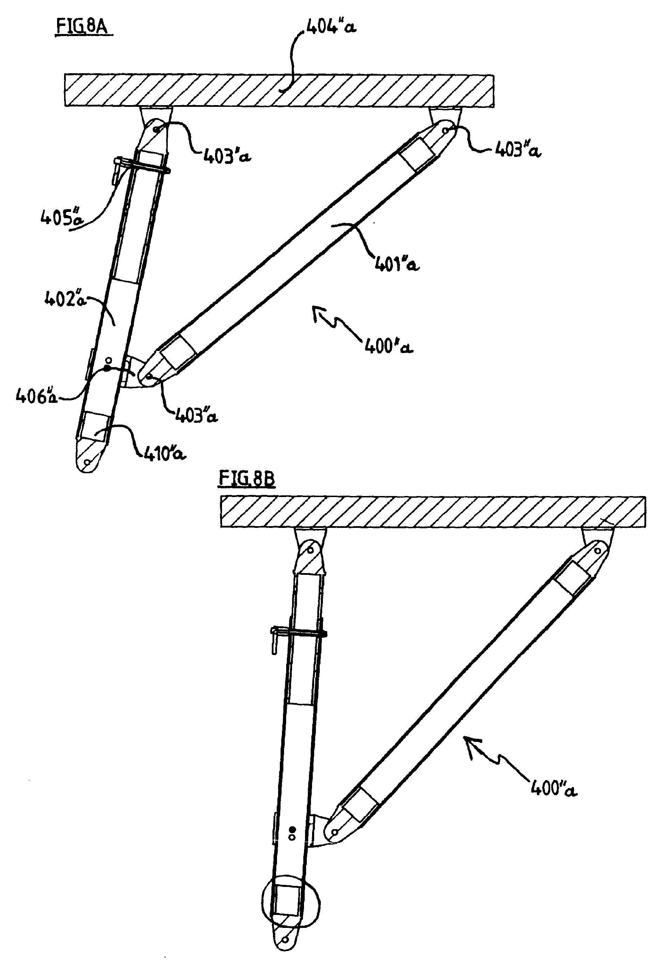

Eine bevorzugte, alternative Ausführungsform der höhenverstellbaren Stützen ist in den Figuren 8A und 8B gezeigt. Dargestellt ist jeweils die linke Stütze 400"a. Diese weist eine in Figur 8A gezeigte niedrige und eine in Figur 8B gezeigte hohe Position auf. Die Stütze besteht aus einem Zugelement 401 "a sowie einem in der Länge verstellbaren Stützelement 402"a. Die Elemente 401 "a, 402"a sind mit Hilfe von Gelenken 403"a so mit dem darüberliegenden Element 404"a der Trägerstruktur sowie miteinander verbunden, daß die Teile 401 "a, 402"a und 404"a eine dreieckige Struktur bilden. Die Höhenverstellung des Stützelements 402"a wird durch die Zweiteilung des Stützelementes und zwei zylindrisch ineinanderschiebbare Abschnitte erreicht. Die beiden verschiebbaren Elemente sind mit Hilfe eines Kugelsperrbolzens 405"a gegeneinander gesichert. Durch die Verbindung des höhenverstellbaren Stützelements 402"a und dem Zugelement 401 "a ändert sich mit der Höhe des Elements 402"a auch dessen Winkel in Bezug auf das darüberliegende Element 404"a der Trägerstruktur. Um diesen Winkel gegebenenfalls nochmals anpassen zu können, kann die Aufhängung 406"a des Elements 401"a an dem Stützelement 402"a ebenfalls in der Höhe variiert werden. Um mögliche Längenunterschiede der Gurte auszugleichen ist darüber hinaus am unteren Ende des Stützelementes ein Federelement 410"a vorgesehen.

Alternativ zu der dargestellten Ausführungsform, bei der die Höhenverstellung des Elements 402"a mit Hilfe zweier ineinanderschiebbarer zylindrischer Elemente erfolgt, kann zwischen den Elementen auch eine Gewindehöhenverstellung vorgesehen sein.

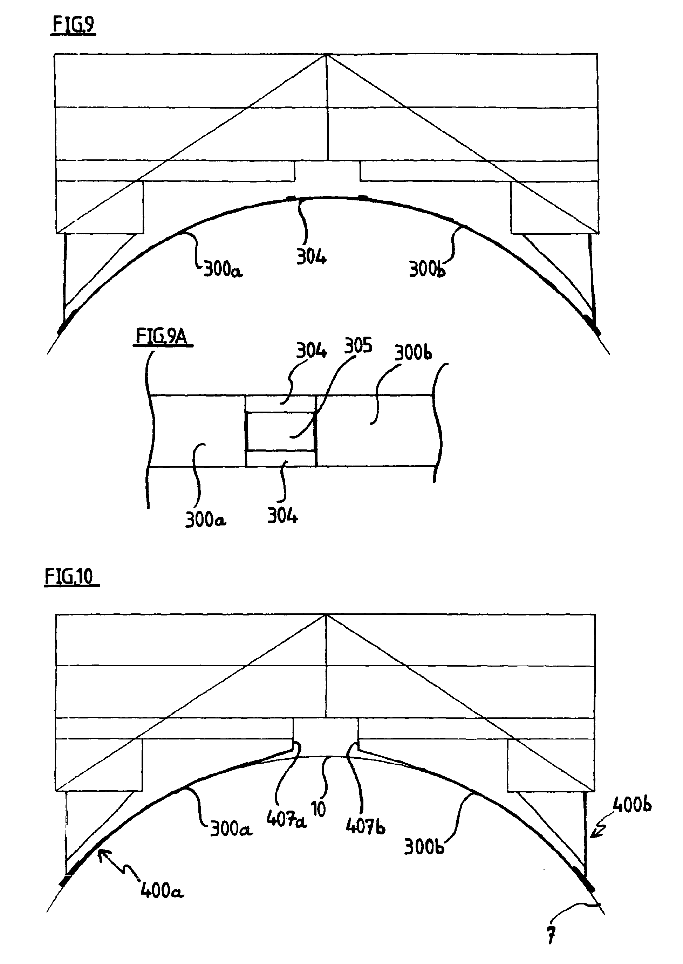

Die in Figur 5 gezeigte Ausführungsform mit einem durchgehenden, d.h. über den Scheitelpunkt 10 des Flugzeugrumpfes 7 greifenden Gurt 300 kann sich in bestimmten Situationen als unpraktisch erweisen, wenn im Scheitelpunkt 10 des Flugzeugrumpfes im Bereich der Spanten Antennen oder andere Einrichtungen auf dem Flugzeugrumpf angeordnet sind. In diesem Fall sind die in den Figuren 9 bis 14 gezeigten Ausführungsformen vorteilhaft.

Der in Figur 9 gezeigte Gurt ist zweigeteilt mit Elementen 300a, 300b, wobei die Elemente im Bereich des Scheitelpunktes 10 des Flugzeugrumpfes mit Hilfe zweier Verbindungsgurte 304 miteinander verbunden sind. Dabei ist zwischen den Verbindungsgurten 304 eine Aussparung 305 zur Aufnahme der auf den Flugzeugrumpf angeordneten Antennen vorgesehen. Diese Anordnung ist besonders deutlich in der Draufsicht aus Figur 9A zu erkennen.

Figur 10 zeigt ebenfalls eine zweigeteilte Ausführungsform des Gurtes 300 mit Elementen 300a, 300b. Jeder der Gurte 300a, 300b ist sowohl mit einer der Stützen 400a, 400b als auch mit einer weiteren Stütze 407a, 407b im Bereich vor dem Scheitelpunkt 10 des Flugzeugrumpfes 7 verbunden. Auf diese Weise bleibt der Scheitelpunkt 10 des Flugzeugrumpfes ohne Bedeckung durch einen der Gurte 300a, 300b. Dabei kann die Aufhängung unmittelbar an der Stütze 407a, 407b erfolgen oder auch über eine Traverse.

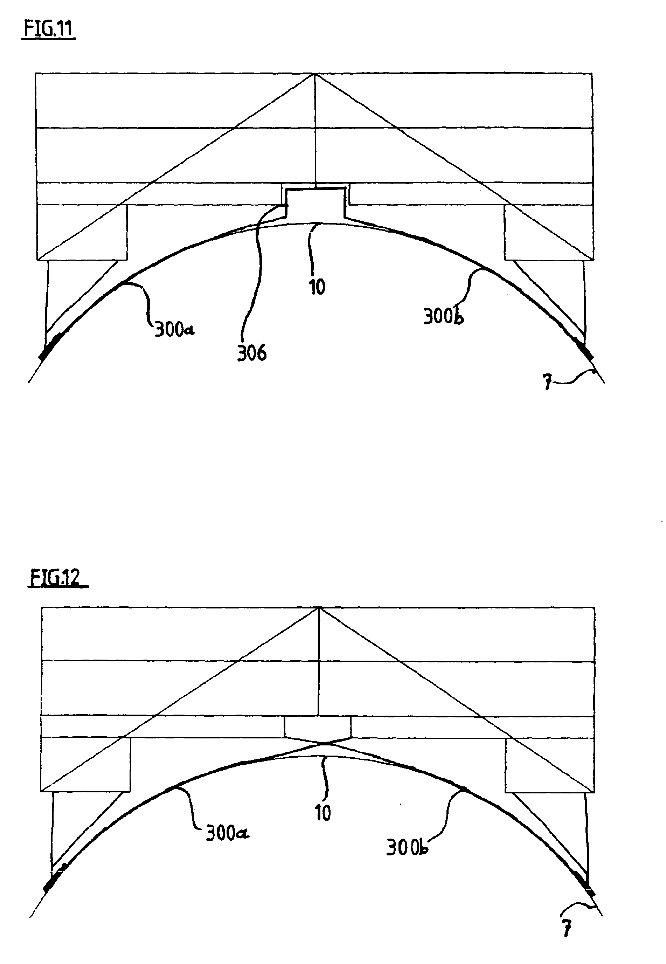

Eine weitere alternative Ausführungsform der Erfindung ist in Figur 11 dargestellt. Im Bereich des Scheitelpunkts 10 des Flugzeugrumpfes 7 sind die beiden voneinander getrennten Gurtelemente 300a, 300b mit Hilfe einer Halteklammer 306 aus Stahl miteinander verbunden, wobei die Halteklammer 306 um mögliche Objekte auf der Rumpfoberseite herumgreift und eine Lastabtragung zwischen den beiden Gurten 300a, 300b ermöglicht.

In Figur 12 ist eine Abspannung der Gurte 300a, 300b überkreuz dargestellt, wodurch im Bereich des Scheitelpunkts 10 des Flugzeugrumpfs 7 ein vergrößerter Abstand zwischen dem Gurt 300a, 300b und dem Flugzeugrumpf 7 erreicht wird. Eine derartige Abspannung über Kreuz erfordert eine Schlitzung der Gurte im Bereich des Scheitelpunkts, so daß diese durch einander hindurchgreifen können.

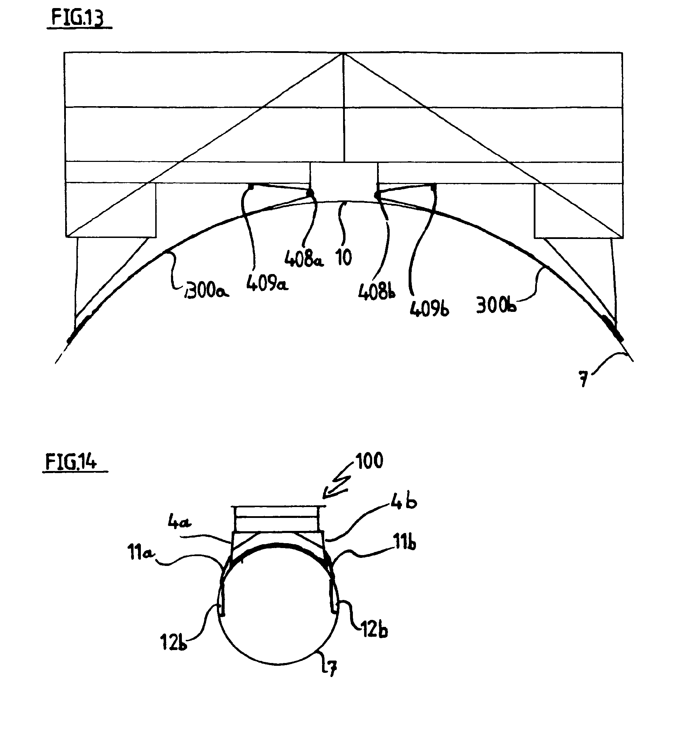

Bei der in Figur 13 gezeigten Ausführungsform sind die Gurte 300a bzw. 300b über Umlenkrollen 408a und 408b an der Befestigungsstruktur angelenkt. Die Befestigungspunkte 409a und 409b sind in ihrer Position einstellbar, so daß Längenunterschiede der Gurte 300a, 300b ausgeglichen werden können.

In Figur 14 ist schematisch die Sicherung der Aufsattelplattform 100 gegen Verrutschen gezeigt. Von den Stützen 4a, 4b der Plattform sind Sicherungsgurte 11 a, 11 b mit den Oberkanten der linken und rechten Türen 12a, 12b verbunden.

Es versteht sich, daß mehrere der in den Figuren 5-7 und 9-13 dargestellten Gurtvarianten an ein und derselben Aufsattelplattvorrichtung realisiert sein können. Insbesondere können durchgehende Gurte entsprechend Figuren 5-7, 9 und 12 an axialen Positionen vorgesehen sein, an denen der Scheitelpunkt des Rumpfes nicht zugänglich sein muß, während die Varianten der Figuren 10, 11 und 13 insbesondere an den axialen Positionen des Rumpfes verwendet werden, an denen der Scheitelpunkt zugänglich sein muß.

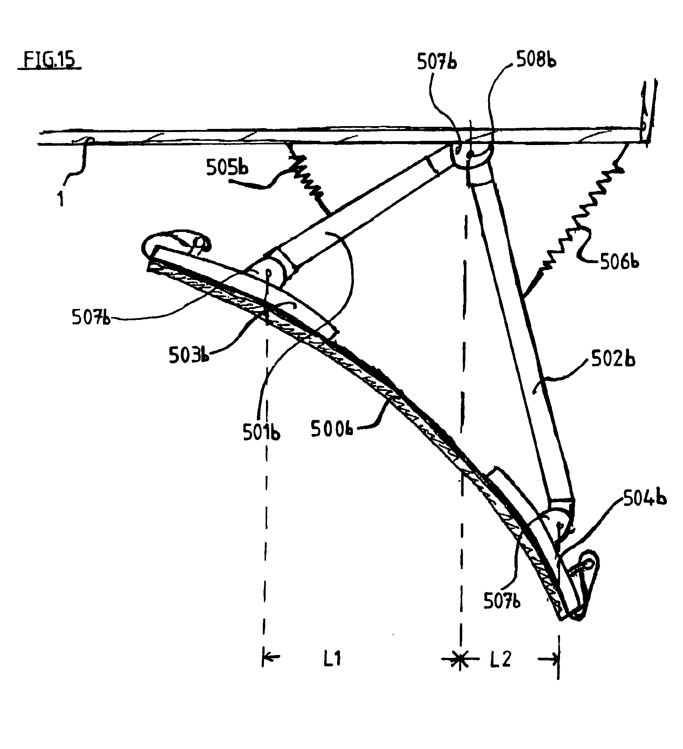

In Figur 15 ist eine alternative Befestigung des erfindungsgemäßen Gurts dargestellt, der konkret aus zwei Gurtabschnitten besteht. Der Gurtabschnitt 500b ist zwischen zwei Druckverteilungsplatten 503b, 504b gespannt. Die Platten 503b, 504b sind jeweils gelenkig mit einer Stütze 501 b, 502b verbunden. Die beiden Stützen wiederum sind schwenkbar in einem gemeinsamen Drehpunkt 508b aufgehängt.

Bei passend gewähltem Abstand zwischen den Drehpunkten der rechten Stützen 501 b, 502b und der linken Stützen (nicht dargestellt) sowie entsprechenden Längen der Stützen 501 b, 502b und der Gurtabschnitte 500b, verschwenken die Stützen beim Auflegen der Plattform auf den Flugzeugrumpf derart, daß die Projektionen L1, L2 der Stützen in einer horizontalen Ebene die gleiche Länge aufweisen. Auf diese Weise wird eine optimale Lastabtragung entlang des Gurtes erreicht, ohne, daß es zu einer erhöhten Punktlast im Bereich der Druckverteilungsplatten 503b, 504b kommt.

Um den Gurtabschnitt 500b auch dann in einem gespannten Zustand zu halten, wenn die Aufsattelplattform nicht auf einen Flugzeugrumpf aufgelegt ist, sind die beiden Stützen 501 b, 502b mit Hilfe von Federelementen 505b, 506b gegen die Trägerstruktur und somit voneinander weg vorgespannt.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartiger Kombination unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Bezugszeichenliste

- 1: Trägerstruktur
- 2a bis 2f: Elemente
- 3: Gurt, Blechstreifen
- 3a bis 3d: Gurte
- 4a, 4b: Stützen
- 5: Arbeitsebene
- 6: Kanten
- 7: Flugzeugrumpf
- 10: Scheitelpunkt
- 11a,11b: Sicherungsgurte
- 12a, 12b: Oberkanten der linken und rechten Türen
- 31 a, 31 b: Auflageelemente
- 32: Gelenke
- 33: Verbindungselemente
- 40a, 40b: Stützen
- 100: Aufsattelplattform
- 300: Gurt
- 300a, 300b: Elemente des Gurtes
- 301: textiler Gurt
- 302: Schaumstoffschicht
- 303: Schutzschicht
- 304: Verbindungsgurt
- 305: Aussparung
- 306: Halteklammer
- 400a: linke Stütze
- 400b: rechte Stütze
- 400'a, 400'b: Stützen
- 400"a: Stütze
- 401"a: Zugelement
- 402"a: Stützelement
- 403"a: Gelenke
- 404"a: Element der Trägerstruktur
- 405"a: Kugelsperrbolzen
- 406"a: Aufhängung
- 407a, 407b: Stützen
- 408a, 408b: Umlenkrollen
- 409a, 409b: Befestigungspunkte
- 410"a: Federelement
- 500b: Gurt
- 501 b: Stütze
- 502b: Stütze
- 503b: Druckverteilerplatte
- 504b: Druckverteilerplatte
- 505b: Federelement
- 506b: Federelement
- 507b: Gelenk
- 508b: Drehpunkt

## Patentansprüche

1. Aufsattelplattform für ein Flugzeug mit einer Arbeitsebene, einer Trägerstruktur sowie mindestens einer Auflagefläche, **dadurch gekennzeichet, dass** die Auflagefläche als Gurt ausgebildet ist, wobei sich der Gurt im wesentlichen in Umfangsrichtung des Rumpfes entlang eines im wesentlichen kreis- oder ellipsenförmigen Rumpfquerschnitts erstreckt.

2. Aufsattelplattform nach Anspruch 1, **dadurch gekennzeichnet, daß** der Gurt aus einem Blech, vorzugsweise aus Aluminium, hergestellt ist.

3. Aufsattelplattform nach Anspruch 1 oder 2, **dadurch gekennzeichnet, daß** der Gurt aus einem textilen Material hergestellt ist.

4. Aufsattelplattform nach einem der Ansprüche 1 bis 3, **dadurch gekennzeichnet, daß** mehrere, vorzugsweise 2, 4, 6 oder 8, Gurte in Umfangsrichtung verlaufend und in axialer Richtung des Flugzeugrumpfes nebeneinander angeordnet sind.

5. Aufsattelplattform nach einem der Ansprüche 1 bis 4, **dadurch gekennzeichnet, daß** der Gurt eine Breite von etwa 100 mm bis 600 mm, vorzugsweise eine Breite von 200 mm bis 400 mm aufweist.

6. Aufsattelplattform nach einem der Ansprüche 1 bis 5, **dadurch gekennzeichnet, daß** die Gurte einen Abstand aufweisen, welcher dem Abstand der Spanten des Flugzeugrumpfes oder einem ganzzahligen Vielfachen davon entspricht.

7. Aufsattelplattform nach einem der Ansprüche 1 bis 6, **dadurch gekennzeichnet, daß** die Gurte einen Abstand zwischen 500 mm und 530 mm, insbesondere von etwa 530 mm oder von etwa 20 Zoll (508 mm) aufweisen.

8. Aufsattelplattform nach einem der Ansprüche 1 bis 7, **dadurch gekennzeichnet, daß** die Länge des Gurts in Umfangsrichtung mindestens 200 mm, vorzugsweise mindestens 500 mm beträgt.

9. Aufsattelplattform nach einem der Ansprüche 1 bis 8, **dadurch gekennzeichnet, daß** sich die Gurte über etwa ein Viertel und vorzugsweise über etwa ein Drittel des Umfangs des Flugzeugrumpfes erstrecken.

10. Aufsattelplattform nach einem der Ansprüche 1 bis 9, **dadurch gekennzeichnet, daß** mehrere, vorzugsweise 2, 4, 6 oder 8, Gurte in Umfangsrichtung des Flugzeuges hintereinander angeordnet sind.

11. Aufsattelplattform nach einem der Ansprüche 1 bis 10, **dadurch gekennzeichnet, daß** mindestens ein Teil der Gurte so angeordnet sind, daß der Scheitelbereich des Flugzeugrumpfes nicht von den Gurten überdeckt ist.

12. Aufsattelplattform nach einem der Ansprüche 1 bis 11, **dadurch gekennzeichnet, daß** der Gurt eine Polsterung, vorzugsweise aus Schaumstoff, Moosgummi oder Luft, aufweist.

13. Aufsattelplattform nach einem der Ansprüche 1 bis 12, **dadurch gekennzeichnet, daß** die Geometrie des Gurts und/ oder der Trägerstruktur für verschiedene Flugzeugbreiten oder Rumpfdurchmesser einstellbar ist.

14. Aufsattelplattform nach einem der Ansprüche 1 bis 13, **dadurch gekennzeichnet, daß** sie eine Einrichtung zur Sicherung gegen Verrutschen aufweist.

15. Aufsattelplattform nach Anspruch 14, **dadurch gekennzeichnet, daß** die Sicherungseinrichtung ein Gurt ist, welcher um den Flugzeugrumpf herum oder durch diesen hindurch greift.

16. Aufsattelplattform nach Anspruch 14, **dadurch gekennzeichnet, daß** die Sicherungseinrichtung ein Gurt ist, welcher mit einem Ende in den Rahmen einer Türöffnung eingehakt ist.

17. Aufsattelplattform nach Anspruch 14, **dadurch gekennzeichnet, daß** die Sicherungseinrichtung mit dem Flugzeugrumpf oder einem daran befestigten Teil verbindbar ist.

18. Aufsattelplattform nach Anspruch 14, **dadurch gekennzeichnet, daß** die Sicherungseinrichtung eine Abstützung gegen die Tragfläche ist.

19. Aufsattelplattform nach einem der Ansprüche 1 bis 18, **dadurch gekennzeichnet, daß** die Arbeitsebene aus mehreren Elementen besteht.

20. Aufsattelplattform nach Anspruch 19, **dadurch gekennzeichnet, daß** die Elemente gegeneinander verschiebbar sind.

21. Aufsattelplattform nach Anspruch 19 oder 20, **dadurch gekennzeichnet, daß** die Elemente bis an den Flugzeugrumpf heranreichen.

22. Aufsattelplattform nach einem der Ansprüche 19 bis 21, **dadurch gekennzeichnet, daß** die Elemente an ihren Kanten Dichtelemente aufweisen, welche einen bündigen Abschluß mit dem Flugzeugrumpf erlauben.

23. Aufsattelplattform nach einem der Ansprüche 1 bis 22, **dadurch gekennzeichnet, daß** der Gurt mit zwei schwenkbar angeschlagenen Stützen verbunden ist.

24. Aufsattelplattform nach Anspruch 23, **dadurch gekennzeichnet, daß** die Stützen um den gleichen Drehpunkt schwenkbar sind.

25. Aufsattelplattform nach Anspruch 23 oder 24, **dadurch gekennzeichnet, daß** die Stützen mit Federn gegen die Trägerstruktur vorgespannt sind, wobei der Gurt auch dann gespannt ist, wenn die Plattform nicht auf einen Flugzeugrumpf aufgelegt ist.

26. Aufsattelplattform nach einem der Ansprüche 23 bis 25, **dadurch gekennzeichnet, daß** die Projektionen der Stützen in einer horizontalen Ebene gleich lang sind, wenn die Plattform auf einen Flugzeugrumpf aufgelegt ist.

27. Aufsattelplattform nach einem der Ansprüche 1 bis 26, **dadurch gekennzeichnet, daß** der Gurt mit einer vorzugsweise gelenkig angeschlagenen Druckverteilerplatte verbunden ist.

28. Aufsattelplattform nach einem der Ansprüche 1 bis 27, **dadurch gekennzeichnet, daß** die Aufsattelplattform Einrichtungen, vorzugsweise Rollen oder Ketten aufweist, so daß sie gegen den Flugzeugrumpf verschiebbar ist.

29. Aufsattelplattform nach einem der Ansprüche 1 bis 28, **dadurch gekennzeichnet, daß** sie zerlegbar ist.

30. Aufsattelplattform nach einem der Ansprüche 1 bis 29, **dadurch gekennzeichnet, daß** die einzelnen Elemente mit Hilfe von Kugelsperrbolzen gegeneinander sicherbar sind.

## Claims

1. A saddle platform for an aircraft, comprising a working level, a supporting structure and at least one bearing surface, **characterized in that** the bearing surface is constructed as a strap, wherein the strap substantially extends in the circumferential direction of the fuselage along a substantially circular or elliptical fuselage cross-section.

2. The saddle platform as claimed in claim 1, wherein the strap is made from a sheet metal, preferably aluminum.

3. The saddle platform as claimed in 1 or 2, wherein the strap is made from a textile material.

4. The saddle platform as claimed in claim 1 to 3, wherein a plurality of, preferably 2, 4, 6 or 8, straps are arranged so as to extend in the circumferential direction and side by side in the axial direction of the fuselage.

5. The saddle platform as claimed in any one of claims 1 to 4, wherein the strap has a width of about 100 mm to 600 mm, preferably a width of 200 mm to 400 mm.

6. The saddle platform as claimed in any one of claims 1 to 5, wherein the straps have a spacing which matches the spacing of the frames of the fuselage or an integral multiple thereof.

7. The saddle platform as claimed in any one of claims 1 to 6, wherein the straps have a spacing between 500 mm and 530 mm, in particular of about 530 mm or about 20 inches (508 mm).

8. The saddle platform as claimed in any one of claims 1 to 7, wherein the length of the strap in the circumferential direction is at least 200 mm, preferably at least 500 mm.

9. The saddle platform as claimed in any one of claims 1 to 8, wherein the straps extend over approximately one quarter, and preferably over approximately one third, of the circumference of the fuselage.

10. The saddle platform as claimed in any one of claims 1 to 9, wherein a plurality of, preferably 2, 4, 6 or 8, straps are arranged one behind the other in the circumferential direction of the aircraft.

11. The saddle platform as claimed in any one of claims 1 to 10, wherein at least some of the straps are arranged in such a way that the apex region of the fuselage is not covered by the straps.

12. The saddle platform as claimed in any one of claims 1 to 11, wherein the strap has padding, preferably consisting of foamed material, microcellular rubber or air.

13. The saddle platform as claimed in any one of claims 1 to 12, wherein the geometry of the strap and/or the supporting structure can be adjusted for different aircraft widths or fuselage diameters.

14. The saddle platform as claimed in any one of claims 1 to 13, wherein it comprises a mechanism to secure against slipping.

15. The saddle platform as claimed in claim 14, wherein the securing mechanism is a strap which reaches around the fuselage or through it.

16. The saddle platform as claimed in claim 14, wherein the securing mechanism is a strap which is hooked by one end in the frame of a door opening.

17. The saddle platform as claimed in claim 14, wherein the securing mechanism can be connected to the fuselage or a part secured thereto.

18. The saddle platform as claimed in claim 14, wherein the securing mechanism is a support against the bearing surface.

19. The saddle platform as claimed in any one of claims 1 to 18, wherein the working level comprises a plurality of elements.

20. The saddle platform as claimed in claim 19, wherein the elements can be displaced relative to each other.

21. The saddle platform as claimed in claim 19 or 20, wherein the elements extend as far as the fuselage.

22. The saddle platform as claimed in any one of claims 19 to 21, wherein at their edges the elements comprise sealing elements which allow flush finishing with the fuselage.

23. The saddle platform as claimed in any one of claims 1 to 22, wherein the strap is connected to two pivotally fastened supports.

24. The saddle platform as claimed in claim 23, wherein the supports can be pivoted about the same pivot point.

25. The saddle platform as claimed in claim 23 or 24, wherein the supports are pre-tensioned against the supporting structure by springs, the strap also being tensioned if the platform is not placed on a fuselage.

26. The saddle platform as claimed in any one of claims 23 to 25, wherein the projections of the supports in a horizontal plane are of equal length if the platform is placed on a fuselage.

27. The saddle platform as claimed in any one of claims 1 to 26, wherein the strap is connected to a pressure distribution panel that is preferably fastened so as to be articulated.

28. The saddle platform as claimed in any one of claims 1 to 27, wherein the saddle platform comprises devices, for example rollers or chains, so it can be displaced toward the fuselage.

29. The saddle platform as claimed in any one of claims 1 to 28, wherein it may be dismantled.

30. The saddle platform as claimed in any one of claims 1 to 29, wherein the individual elements can be secured relative to each other using quick release pins.

## Revendications

1. Plate-forme d'accouplement pour un avion, avec un plan de travail, une structure porteuse ainsi qu'au moins une surface d'appui, **caractérisée en ce que** la surface d'appui est constituée en tant que sangle, la sangle s'étendant essentiellement dans la direction circonférentielle du fuselage, le long d'une section transversale de forme essentiellement circulaire ou elliptique du fuselage.

2. Plate-forme d'accouplement selon la revendication 1, **caractérisée en ce que** la sangle est fabriquée à partir d'une tôle, de préférence en aluminium.

3. Plate-forme d'accouplement selon la revendication 1 ou 2, **caractérisée en ce que** la sangle est fabriquée à partir d'un matériau textile.

4. Plate-forme d'accouplement selon l'une des revendications 1 à 3, **caractérisée en ce que** plusieurs sangles, de préférence 2, 4, 6 ou 8, courent dans la direction circonférentielle et sont disposées l'une à côté de l'autre dans la direction axiale du fuselage de l'avion.

5. Plate-forme d'accouplement selon l'une des revendications 1 à 4, **caractérisée en ce que** la sangle présente une largeur d'environ 100 mm à 600 mm, de préférence une largeur de 200 mm à 400 mm.

6. Plate-forme d'accouplement selon l'une des revendications 1 à 5, **caractérisée en ce que** les sangles présentent un intervalle, lequel correspond à l'intervalle des couples du fuselage de l'avion ou à un multiple entier de ceux-ci.

7. Plate-forme d'accouplement selon l'une des revendications 1 à 6, **caractérisée en ce que** les sangles présentent un intervalle compris entre 500 mm et 530 mm, en particulier d'environ 530 mm ou d'environ 20 pouces (508 mm).

8. Plate-forme d'accouplement selon l'une des revendications 1 à 7,
**caractérisée en ce que** la longueur de la sangle dans la direction circonférentielle est d'au moins 200 mm, de préférence d'au moins 500 mm.

9. Plate-forme d'accouplement selon l'une des revendications 1 à 8, **caractérisée en ce que** les sangles s'étendent sur environ un quart et de préférence sur environ un tiers de la circonférence du fuselage de l'avion.

10. Plate-forme d'accouplement selon l'une des revendications 1 à 9, **caractérisée en ce que** plusieurs sangles, de préférence 2, 4, 6 ou 8, sont disposées l'une derrière l'autre dans la direction circonférentielle de l'avion.

11. Plate-forme d'accouplement selon l'une des revendications 1 à 10, **caractérisée en ce qu'**au moins une partie des sangles est disposée de telle sorte que la zone culminante du fuselage de l'avion ne soit pas recouverte par les sangles.

12. Plate-forme d'accouplement selon l'une des revendications 1 à 11, **caractérisée en ce que** la sangle présente un rembourrage, de préférence en produit alvéolaire, en caoutchouc spongieux ou à air.

13. Plate-forme d'accouplement selon l'une des revendications 1 à 12, **caractérisée en ce que** la géométrie de la sangle et/ou de la structure porteuse est réglable pour différentes largeurs d'avion ou différents diamètres de fuselage.

14. Plate-forme d'accouplement selon l'une des revendications 1 à 13, **caractérisée en ce qu'**elle présente un dispositif de sécurité anti-glissement.

15. Plate-forme d'accouplement selon la revendication 14, **caractérisée en ce que** le dispositif de sécurité est une sangle qui passe autour du fuselage de l'avion ou à travers celui-ci.

16. Plate-forme d'accouplement selon la revendication 14, **caractérisée en ce que** le dispositif de sécurité est une sangle qui est accrochée par une extrémité dans le cadre d'une ouverture de porte.

17. Plate-forme d'accouplement selon la revendication 14, **caractérisée en ce que** le dispositif de sécurité peut être relié au fuselage de l'avion ou à une pièce fixée sur celui-ci.

18. Plate-forme d'accouplement selon la revendication 14, **caractérisée en ce que** le dispositif de sécurité est un appui contre la surface portante.

19. Plate-forme d'accouplement selon l'une des revendications 1 à 18, **caractérisée en ce que** le plan de travail se compose de plusieurs éléments.

20. Plate-forme d'accouplement selon la revendication 19, **caractérisée en ce que** les éléments peuvent être coulissés l'un contre l'autre.

21. Plate-forme d'accouplement selon la revendication 19 ou 20, **caractérisée en ce que** les éléments vont jusque sur le fuselage de l'avion.

22. Plate-forme d'accouplement selon l'une des revendications 19 à 21, **caractérisée en ce que** les éléments présentent sur leurs bords des éléments d'étanchéité qui permettent une fermeture affleurée avec le fuselage de l'avion.

23. Plate-forme d'accouplement selon l'une des revendications 1 à 22, **caractérisée en ce que** la sangle est reliée par deux supports mis en butée de façon orientable.

24. Plate-forme d'accouplement selon la revendication 23, **caractérisée en ce que** les supports sont orientables autour du même point d'appui.

25. Plate-forme d'accouplement selon la revendication 23 ou 24, **caractérisée en ce que** les supports sont mis en précontrainte par des ressorts contre la structure porteuse, la sangle étant alors également tendue lorsque la plate-forme n'est pas posée sur un fuselage d'avion.

26. Plate-forme d'accouplement selon l'une des revendications 23 à 25, **caractérisée en ce que** les projections des supports sont de même longueur dans un plan horizontal lorsque la plate-forme est posée sur un fuselage d'avion.

27. Plate-forme d'accouplement selon l'une des revendications 1 à 26, **caractérisée en ce que** la sangle est reliée par une plaque répartissant la compression de préférence mise en butée de façon articulée.

28. Plate-forme d'accouplement selon l'une des revendications 1 à 27, **caractérisée en ce que** la plate-forme d'accouplement présente des dispositifs, de préférence des rouleaux ou des chenilles, de telle sorte qu'elle puisse être coulissée contre le fuselage de l'avion.

29. Plate-forme d'accouplement selon l'une des revendications 1 à 28, **caractérisée en ce qu'**elle est démontable.

30. Plate-forme d'accouplement selon l'une des revendications 1 à 29, **caractérisée en ce que** les différents éléments peuvent être sécurisés l'un contre l'autre au moyen de chevilles d'arrêt à billes.
